# EUROPEAN PATENT SPECIFICATION

(11) **EP 2 487 562 B1**
(45) Date of publication and mention of the grant of the patent: **29.06.2016**
(21) Application number: 11154134.8
(22) Date of filing: 11.02.2011
(51) Int. Cl.: G06F 3/0354, G06F 1/16

(54) **Optical navigation module with alignment features**
Optisches Navigationsmodul mit Ausrichtungsmerkmalen
Module de navigation optique doté de fonctions d'alignement

(43) Date of publication of application: 15.08.2012
(73) Proprietor: BlackBerry Limited, Waterloo, ON N2K 0A7 (CA)
(72) Inventor: Chen, Chao, Waterloo Ontario N2L 3L3 (CA)
(74) Representative: Noble, Nicholas

(56) References cited:
- US-A1- 2002 167 489
- US-A1- 2005 221 518
- US-A1- 2007 242 057
- US-A1- 2010 066 672
- US-A1- 2010 302 159
- US-B1- 7 816 697

## Description

### FIELD

The present disclosure relates to mobile devices, and more specifically to an optical navigation module with alignment features for a mobile device.

### BACKGROUND

Mobile devices are becoming more prevalent and more advanced. Mobile devices can include, but are not limited to, cellular telephones, smart telephones, wireless personal digital assistants (PDAs), and laptop computers with wireless 802.11 or Bluetooth capabilities. These devices can run on a wide variety of networks from data-only networks such as Mobitex^{®} and DataTAC^{®} networks to complex voice and data networks such as GSM/GPRS, CDMA, EDGE, UMTS and CDMA2000 networks. As the technology associated with mobile devices continues to advance, users of these mobile devices are becoming more reliant on these mobile devices. Technology advances are being made with respect to navigation tools. For example, many conventional mobile devices used track wheels to navigate items displayed on the display of the mobile device. At one point, track balls or navigation pads were incorporated into these devices. Currently, optical navigation tools, such as optical navigation pads and optical jog balls, are becoming popular. Conventional optical navigation tools can use an electrical connector to communicatively couple an optical navigation tool and a processor to control navigation among items displayed on the display screen of the mobile device. Due to imprecision in the length of these electrical connectors, some optical navigation tools are not properly aligned after fabrication. Specifically, due to the imprecision in the length of the electrical connector, the optical navigation tool can be tilted or angled towards one of the sides of the mobile device. For example, in the event the electrical connector is longer than desired, the side of the optical navigation tool having the coupled electrical connector can be higher than the opposite side of the optical navigation tool. Conversely, in the event the electrical connector is shorter than desired, the side of the optical navigation tool having the coupled electrical connector can be lower than the opposite side of the optical navigation tool. For some mobile devices, the tactile feel for the optical navigation tool is poor due to improper support in the z-direction or z-axis.

US 2010/0066672 details an optical user interface in a mobile communication device. Motion of an input mechanism of the mobile communication device is detected via an optical sensor. In response to detection, one or more properties governing the motion are evaluated based on input from a motion sensor. Control information is generated based on evaluation.

US 2010/302159 is directed to an optical navigation device that includes an optical transmission element, operable in use to transmit light from an illumination source to a sensor via a mousing surface, and a housing unit. The optical transmission element may have an alignment shaft. Ideally the optical transmission element and housing unit are assembled to a substrate by snap-fit. The alignment shaft ensures that the optics are properly aligned to the substrate and the light source and sensor thereon.

US2002/167489 is directed to an apparatus for controlling the position of a screen pointer for an electronic device having a display screen includes a pushbutton for selecting an item displayed on the display screen. The pushbutton includes an imaging surface against which a portion of the tip of a human digit may be placed. A light source illuminates that portion of the tip of the digit that is placed against the imaging surface, thereby generating reflected images. The apparatus includes a motion transducer. A lens receives the reflected images and directs the reflected images onto the motion transducer. The motion transducer generates digital representations of the reflected images. The motion transducer generates a first set of movement data based on the digital representations of the reflected images. The first set of movement data is indicative of motion of the tip of the digit across the imaging surface

US 7,816,697 is directed to a packaging structure and method are provided for packaging an optoelectronic device. Generally, the packaging structure includes: (i) an integrated circuit (IC) package to which the optoelectronic device is affixed; (ii) an optical plug mounted to the IC package, the optical plug positioned relative to the optoelectronic device to direct light to or from the optoelectronic device, the optical plug having an interior optical surface closest to the optoelectronic device that does not make physical contact with either the optoelectronic device or the IC package. Preferably, the packaging structure can further include air or an index matching fluid in a gap between the interior optical surface and the optoelectronic device or IC package. More preferably, both the IC package and the optical plug include features to facilitate alignment and mounting of the optical plug to the IC package during assembly.

US 2005/221518 is directed to methods of packaging a semiconductor light emitting device in a reflector having a moat positioned between a lower and an upper sidewall thereof, the upper and lower sidewall defining a reflective cavity, include dispensing encapsulant material into the reflective cavity including the light emitting device therein to cover the light emitting device and to form a convex meniscus of encapsulant material in the reflective cavity extending from an edge of the moat without contacting the upper sidewall of the reflector. The encapsulant material in the reflective cavity is cured. Packaged semiconductor light emitting devices and reflectors for the same are also provided.

US 2007/242057 is directed to media device for storing and playing media such as audio, video or images, includes a memory device configured to store a plurality of media items in a digital format. The media device also includes a display configured to present a group of media items from the plurality of stored media items and to present a visual indicator that is capable of scrolling through the displayed group of media items in order to designate a specific media item from the group of media items. The media device further includes a touch pad configured to receive input from a sliding motion or a tapping motion of a finger. The sliding motion of the finger controls the movement of the visual indicator through the group of media items. The tapping motion of the finger selects the specific media item that is designated by the visual indicator.

### BRIEF DESCRIPTION OF THE DRAWINGS

Implementations of the present disclosure will now be described, by way of example only, with reference to the attached Figures, wherein:
Figure 1 is a front view of a mobile device having an optical navigation tool in accordance with an exemplary implementation;
Figure 2 is a block diagram of a mobile device in a communication network in accordance with an exemplary implementation;
Figure 3 is a perspective view of an optical navigation module for a mobile device in accordance with an exemplary implementation;
Figure 4 is a cross section view of an alignment flange in accordance with an exemplary implementation; and
Figure 5 is a cross section of an optical navigation module for a mobile device in accordance with an exemplary implementation.

### DETAILED DESCRIPTION

The invention is set out in the appended claims.

As will be appreciated for simplicity and clarity of illustration, where appropriate, reference numerals have been repeated among the different figures to indicate corresponding or analogous elements. In addition, numerous specific details are set forth in order to provide a thorough understanding of the implementations described herein. However, those of ordinary skill in the art will understand that the implementations described herein can be practiced without these specific details. In other instances, methods, procedures and components have not been described in detail so as not to obscure the related relevant feature being described. Also, the description is not to be considered as limiting the scope of the implementations described herein.

Several definitions that apply throughout this disclosure will now be presented. The word "coupled" is defined as connected, whether directly or indirectly through intervening components, and is not necessarily limited to physical connections. The term "communicatively coupled" is defined as connected, whether directly or indirectly through intervening components, is not necessarily limited to a physical connection, and allows for the transfer of data. The term "mobile device" is defined as any electronic device that is capable of at least accepting information entries from a user and includes the device's own power source. A "wireless communication" means communication that occurs without wires using electromagnetic radiation. The term "memory" refers to transitory memory and non-transitory memory. For example, non-transitory memory can be implemented as Random Access Memory (RAM), Read-Only Memory (ROM), flash, ferromagnetic, phase-change memory, and other non-transitory memory technologies.

The present disclosure describes an optical navigation module with alignment features for a mobile device. The optical navigation module can include a rigid flange having a top surface. An optical navigation unit can be coupled to the top surface of the rigid flange with an electrical connector electrically coupled to the optical navigation unit. An alignment flange can be coupled to the rigid flange with the alignment feature including one or more alignment features. The alignment feature can be a hole adapted to receive an alignment pin to hold and align the optical navigation module. By using the alignment features, the optical navigation module can reduce tilting caused by imprecision in the length of the electrical connector. In addition, the optical navigation module can provide support in the z-direction or z-axis which can result in improved tactile feel for the optical navigation module.

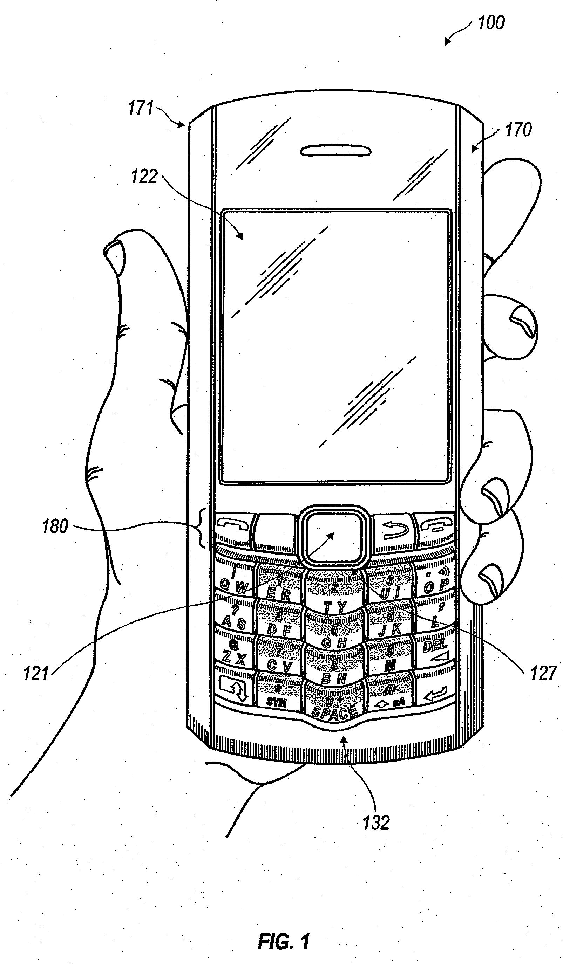

Referring to Figure 1, a front view of a mobile device in accordance with an exemplary implementation is illustrated. As shown, the mobile device 100 can have a reduced QWERTY keyboard 132. Each key of the keyboard 132 can be associated with at least one indicia representing an alphabetic character, a numeral, or a command (such as a space command, return command, or the like). The plurality of the keys having alphabetic characters can be arranged in a standard keyboard layout. This standard keyboard layout can be a QWERTY layout (as shown in Figure 1), a QZERTY layout, a QWERTZ layout, an AZERTY layout, a Dvorak layout, a Russian keyboard layout, a Chinese keyboard layout, or other similar layout. These standard layouts are provided by way of example and other similar standard layouts are considered within the scope of this disclosure. The keyboard layout can be based on the geographical region in which the handheld device is intended for sale. In some examples, the keyboard can be interchangeable such that the user can switch between layouts. In other examples, the keyboard is a virtual keyboard provided on a touch screen display (not shown).

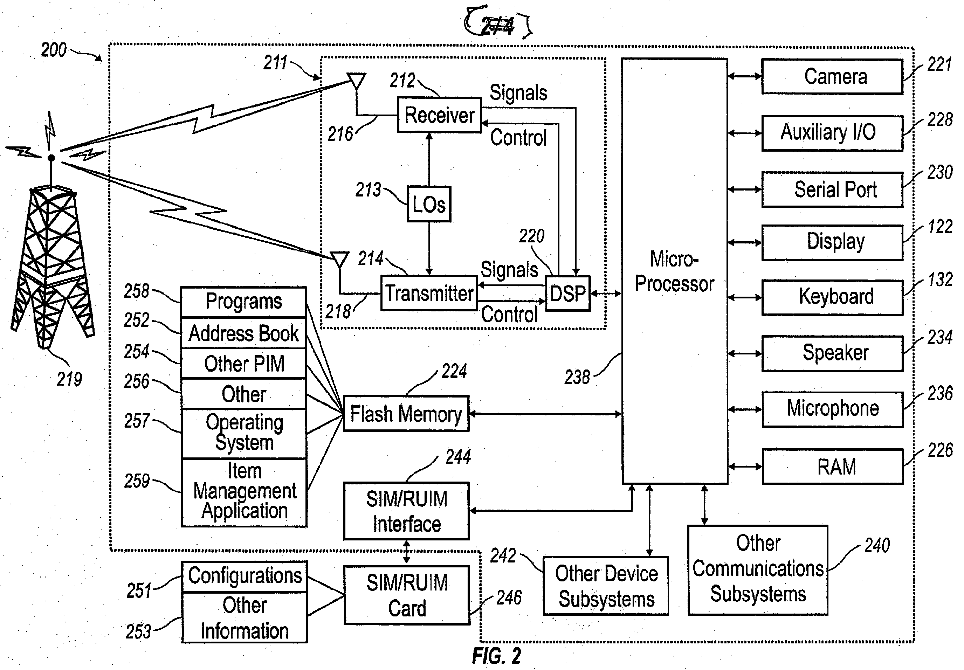

As shown, the exemplary mobile device 100 can be communicatively coupled to a wireless network 219 as exemplified in the block diagram of Figure 2. These figures are exemplary only, and those persons skilled in the art will appreciate that additional elements and modifications may be necessary to make the mobile device 100 work in particular network environments. While in the illustrated embodiment, the mobile device 100 is a smart phone, however, in other embodiments, the mobile device 100 can be a personal digital assistant (PDA), laptop computer, desktop computer, tablet computer, server, or other mobile device capable of sending and receiving electronic messages.

As maybe appreciated from Figure 1, the mobile device 100 can have the lighted display 122 located above the keyboard 132 constituting a user input and suitable for accommodating textual input to the mobile device 100. The front face 170 of the mobile device 100 can have a navigation row 180. As shown, the mobile device 100 can be of a unibody construction, also known as a "candy-bar" design. In alternate embodiments, the mobile device 100 can be a "clamshell" or a "slider" design.

As described above, the mobile device 100 can include an auxiliary input that acts as a cursor navigation tool 127 and which can be also exteriorly located upon the front face 170 of the mobile device 100. The front face location of the navigation tool 127 can allow the navigation tool 127 to be easily thumb-actuable or finger-actuable like the keys of the keyboard 132. An embodiment provides the navigation tool 127 in the form of the optical navigation module 121 having one or more sensors, such as a capacitive sensor, optical sensor, or both, which can be utilized to instruct two-dimensional or three-dimensional screen cursor movement in substantially any direction, as well as act as an actuator when the optical navigation module 121 is depressed like a button. The placement of the navigation tool 127 may be above the keyboard 132 and below the display screen 122; here, it can avoid interference during keyboarding and does not block the operator's view of the display screen 122 during use, for example, as shown in Figure 1.

The mobile device 100 can be configured to send and receive messages. The mobile device 100 includes a body 171 which can, in some embodiments, be configured to be held in one hand by an operator of the mobile device 100 during text entry. The display 122 is included which is located on the front face 170 of the body 171 and upon which information is displayed to the operator during text entry. The mobile device 100 can also be configured to send and receive voice communications such as mobile telephone calls. The mobile device 100 can also include a camera to allow the user to take electronic photographs which can be referred to as photos or pictures.

Referring to Figure 2, a block diagram of a mobile device in a communication network in accordance with an exemplary implementation is illustrated. As shown, the mobile device 100 can include a microprocessor 238 that controls the operation of the mobile device 100, such as facilitating communications, providing a graphical user interface, executing programs, and so forth. A communication subsystem 211 performs communication transmission and reception with the wireless network 219. The microprocessor 238 further can be coupled with an auxiliary input/output (I/O) subsystem 228. Additionally, in at least one implementation, the microprocessor 238 can be coupled to a serial port (for example, a Universal Serial Bus port) 230 that facilitates communication with other devices or systems via the serial port 230. A display 122 can be communicatively coupled to the microprocessor 238 to facilitate display of information to an operator of the mobile device 100. When the mobile device 100 is equipped with a keyboard 132, which can be physical or virtual (for example, displayed as images of keys rendered on a touch screen), the keyboard 132 can be communicatively coupled to the microprocessor 238. The mobile device 100 can include one or more speakers 234 and one or more microphones 236, which can advantageously be communicatively coupled to the microprocessor 238 and are discussed in further detail below. Other communication subsystems 240 and other mobile device subsystems 242 are generally indicated as communicatively coupled with the microprocessor 238. An example of a communication subsystem 240 is a short-range communication system such as a BLUETOOTH^{®} communication module or a WI-FI^{®} communication module (a communication module in compliance with IEEE 802.11b, g or n) and associated circuits and components. Additionally, the microprocessor 238 can perform operating system functions and executes programs or software applications on the mobile device 100. In some implementations, not all of the above components are included in the mobile device 100. The auxiliary I/O subsystem 228 can take the form of one or more different navigation tools (multi-directional or single-directional), external I/O devices such as keyboards, and other subsystems capable of providing input or receiving output from the mobile device 100.

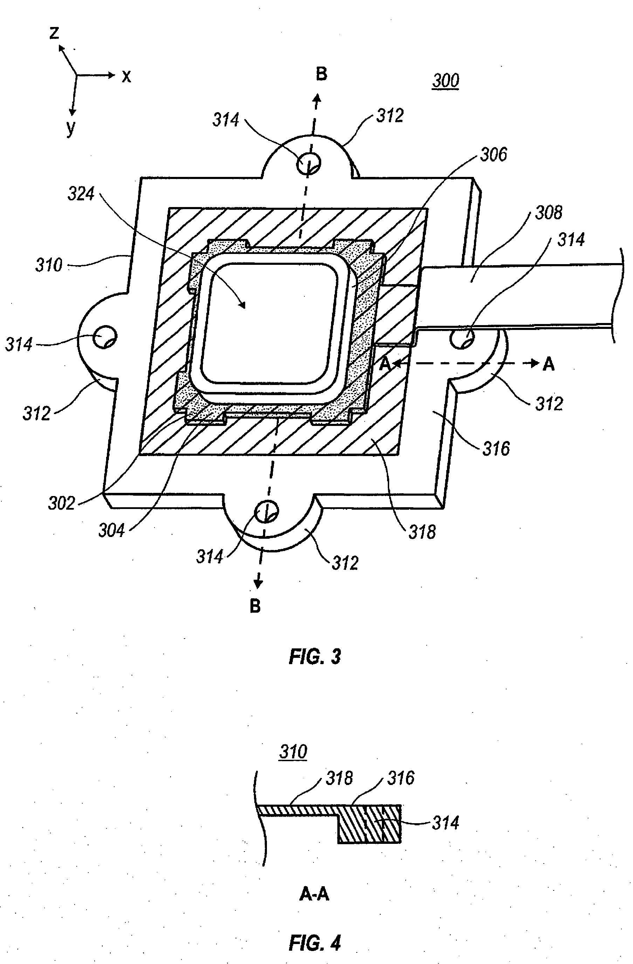

The auxiliary I/O subsystem 228 can take the form of a variety of different navigation tools 127 (multi-directional or single-directional) such as an optical navigation module or tool 121 as illustrated in the exemplary embodiment shown in Figure 1 and shown in more detail in Figures 3-5. In other embodiments, a trackball, a thumbwheel, a navigation pad, a joystick, a touch-sensitive interface, or other I/O interface can be used. The navigation tool 127 can be located on a front surface 170 of the mobile device 100 or may be located on any exterior surface of the mobile device 100. Other auxiliary I/O subsystems can include external display devices and externally connected keyboards (not shown). While the above examples have been provided in relation to the auxiliary I/O subsystem 228, other subsystems capable of providing input or receiving output from the mobile device 100 are considered within the scope of this disclosure. Additionally, other keys may be placed along the side of the mobile device 100 to function as escape keys, volume control keys, scrolling keys, power switches, or user programmable keys, and may likewise be programmed accordingly.

The mobile device 100 can be equipped with components to enable operation of various programs, as shown in Figure 2. As shown, the memory 224 can provide storage for the operating system 257, device programs 258, data, and so forth. The operating system 257 can be generally configured to manage other programs 258 that are also stored in memory 224 and executable on the processor 238. The operating system 257 can handle requests for services made by programs 258 through predefined program interfaces. More specifically, the operating system 257 can typically determine the order in which multiple programs 258 are executed on the processor 238 and the execution time allotted for each program 258, manages the sharing of memory 224 among multiple programs 258, handles input and output to and from other device subsystems 242, and so forth. In addition, operators can interact directly with the operating system 257 through a user interface, typically including the keyboard 132 and display screen 122. The operating system 257, programs 258, data, and other information can be stored in memory 224, RAM 226, read-only memory (ROM), or another suitable storage element (not shown). An address book 252, personal information manager (PIM) 254, and other information 256 can also be stored.

The mobile device 100 can be enabled for two-way communication within voice, data, or voice and data communication systems. A Subscriber Identity Module (SIM) or Removable User Identity Module (RUIM) can be utilized to authorize communication with the communication network 219. A SIM/RUIM interface 244 within the mobile device 100 can interface a SIM/RUIM card 246 to the microprocessor 238 and can facilitate removal or insertion of a SIM/RUIM card 246. The SIM/RUIM card 246 features memory and can hold key configurations 251, and other information 253 such as identification and subscriber related information. The mobile device 100 can be equipped with an antenna 218 for transmitting signals to the communication network 219 and another antenna 216 for receiving communication from the communication network 219. Alternatively, a single antenna (not shown) can be utilized to both transmit and receive signals. A communication subsystem 211 can include a transmitter 214 and receiver 212, one or more antennae 216, 218, local oscillators (LOs) 213, and a processing module 220 such as a digital signal processor (DSP) 220.

The mobile device 100 can include a touch-sensitive display or touchscreen that includes one or more touch location sensors, an overlay, and a display 122, such as a liquid crystal display (LCD) or light emitting diode (LED) display. The touch location sensor(s) can be a capacitive, resistive, infrared, surface acoustic wave (SAW), or other type of touch-sensitive sensor and can be integrated into the overlay. The overlay, or cover, can be comprised of laminated glass, plastic, or other suitable material(s) and is advantageously translucent or transparent. A touch, or touch contact, can be detected by the touchscreen and processed by the processor 238, for example, to determine a location of the touch. Touch location data can include the center of the area of contact or the entire area of contact for further processing. A touch may be detected from a contact member, such as a body part of a user, for example a finger or thumb, or other objects, for example a stylus, pen, or other pointer, depending on the nature of the touch location sensor.

Referring to Figure 3, a top perspective view of an optical navigation module in accordance with an exemplary implementation is illustrated. As shown, the optical navigation module 300 can include a rigid flange 302 having a top surface 304. The rigid flange 302 can be substantially square in shape. The rigid flange 302 can be made of a material that provides support in the z-direction. For example, the rigid flange 302 can be made of plastic or metal. The optical navigation module 300 can include an optical navigation unit 306 coupled to the top surface of the rigid flange. The housing of the rigid flange 302 and the housing of the optical navigation unit 306 can be co-molded from the same molding part. The optical navigation unit 306 can be substantially square in shape. The optical navigation unit 306 can provide navigation in two or three directions or axis, such as the x-direction (or x-axis), y-direction (or y-axis), and z-direction (or z-axis). The optical navigation unit 306 can include an optical navigation tool, such as an optical navigation pad or an optical jog ball. Alternatively, other navigation units can be used in place of the optical navigation unit 306, such as a navigation pad or jog ball. The optical navigation module 300 can include an electrical connector 308 for communicatively coupling the optical navigation unit 306 to the processor 238. For example, a flexible printed circuit (FPC) 308 can communicatively couple the optical navigation unit 306 to the processor 238. The optical navigation unit 306 can provide user inputs to the processor 238 which can allow a user to navigate among items displayed on the display 122 of the mobile device 100, select an item displayed on the display 122 of the mobile device, or both.

The optical navigation module 300 can include an alignment flange 310. The alignment flange 310 can be substantially square in shape. The alignment flange 310 can hold and align the optical navigation module 300 in the x-direction (or x-axis) and y-direction (or y-axis) once assembled in a mobile device 100. The alignment flange 310 can include or form one or more alignment features 312. As shown, the alignment flange 310 can form one or more holes 314 with each hole 314 adapted to receive an alignment pin (not shown) or other suitable alignment component. For example, alignment pins can extend from a front housing, a rear housing, or from a keypad assembly. One or more of the alignment pins can extend partially through or entirely through the holes 314. Alternatively, the one or more alignment features 312 can be alignment pins extending from the alignment flange 310 and can extend partially through or entirely through one or more holes in another component, such as a front housing, circuit board or keypad assembly. Although, holes and pins are described as exemplary alignment features 312, other alignment features can be implemented.

Referring to Figure 4, a cross-sectional view of the alignment flange in accordance with an exemplary embodiment is illustrated. As shown, the alignment flange 310 can comprise a thick outer portion 316 and a thin center portion 318 with the thick portion 316 being thicker than the thin portion 318. The outer portion 316 and the center portion 318 can be co-molded from the same material. The alignment flange 310 can be substantially square in shape. The outer portion 316 can partially or fully surround the center portion 318. The center portion 318 can be substantially square in shape. The center portion 318 can be co-molded with the rigid flange 302. The center portion 318 can partially or fully encase or envelope the rigid flange 302. The alignment flange 310 can be preloaded such that the outer portion 316 is thicker than the center portion 318 with a top surface 324 of the optical navigation unit 306 being below the height of the thick portion 316 prior to assembly; however, due to compression of the outer portion 316 during assembly, the top surface 324 of the optical navigation unit 306 can be higher than the outer portion 316 after assembly. By preloading the alignment flange 310, the optical navigation module 300 can provide improved tactile feel.

Referring again to Figure 3, the one or more alignment features 312 can be formed in the outer portion 316. By forming each alignment feature 312 in the thick outer portion 316, the outer portion 316 can provide improved support compared to an alignment feature 312 formed in the thinner center portion 318. In addition, there can be reduced risk of damage to the alignment feature 312 due to the thickness of the outer portion 316. Each alignment feature 312 can extend from a side of the outer portion 316. The thin center portion 318 can deflect in response to pressure being applied to the optical navigation unit 306.

The alignment flange 310 can be made of rubber or other suitable material and can assist in preventing foreign material, such as dust or water, from entering the mobile device 100 via the optical navigation module 300 which can extend out of an opening of a front housing (not shown) of the mobile device 100. The outer portion 316 can be compressed by, for example, the rigid flange 302 and the front housing once assembled.

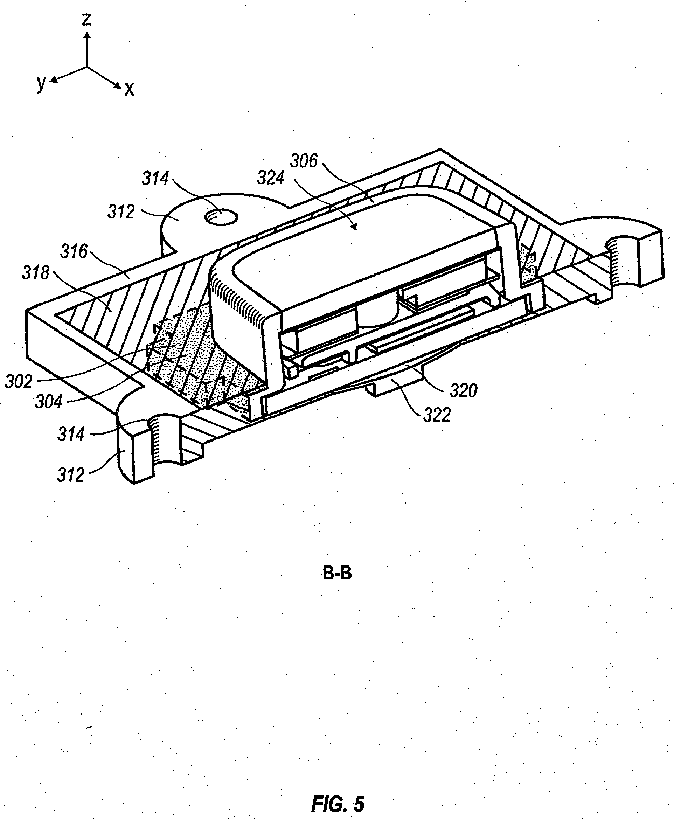

Referring to Figure 5, a cross-sectional view of the optical navigation module in accordance with an exemplary implementation is illustrated. As shown, the optical navigation module 300 can include a dome overlay 320 on the underside of the optical navigation module 300. The overlay 320 can be rubber and can partially or fully cover the underside of the alignment flange 310. A metal layer (not shown) can be interposed between the alignment flange 310 and the overlay 320 to provide additional support in the z-direction or z-axis for the optical navigation module 300. The overlay 320 can be co-molded with the thin center portion 318 of the alignment flange 310.

In one or more embodiments, a dome actuator 322 can be coupled to the underside of the optical navigation module 300. For example, the actuator 322 can be coupled to the overlay 320. The actuator 322 can provide an input in response to an application of pressure to the top surface 324 of the optical navigation unit 306. The actuator 322 can be a soft or rigid or semi-rigid material and can have a cylindrical or semi-cylindrical shape. The actuator 322 can be attached to the overlay 320 utilizing glue or other suitable material.

The dome overlay 320 and dome actuator 322 can be attached to one another. If the dome actuator 322 is configured to be lower in the z-axis than the bottom surface of the outer portion 316 of the alignment flange 310, the thin center portion 318 can be stretched by the difference between the heights of the bottom of the alignment flange 310 and the dome actuator 322 and a pressure force can be imposed upon the dome actuator 322. The imposed force can enhance the connectivity between the actuator 322 and the surface beneath the actuator 322, which can enhance the tactile feel of the navigation unit 306.

The present disclosure may be embodied in other specific forms without departing from its essential characteristics. The described implementations are to be conportioned in all respects only as illustrative and not restrictive. The scope of the disclosure is, therefore, indicated by the appended claims rather than by the foregoing description. All changes that come within the meaning and range of equivalency of the claims are to be embraced within their scope.

## Claims

1. An optical navigation module (300), comprising
a rigid flange (302) having a top surface;
an optical navigation unit (306) coupled to the top surface of the rigid flange (302);
an electrical connection electrically coupled to the optical navigation unit (306); and
an alignment flange (310) coupled to the rigid flange (302), the alignment flange (310) including:
a center portion (318) that is deflectable in response to pressure being applied to the optical navigation unit (306);
a compressible outer portion (316) that surrounds the center portion (318), the outer portion being thicker than the center portion (318); and
at least one alignment feature (312).

2. The optical navigation module (300) of claim 1, wherein the rigid flange (302) is plastic.

3. The optical navigation module (300) of claim 1 or 2, wherein the rigid flange (302) is sufficiently rigid to provide support for the optical navigation module (300) in a z-direction when pressure is applied to the optical navigation unit (306).

4. The optical navigation module (300) of claim 1, 2, or 3, wherein the optical navigation unit (306) is one of an optical navigation pad and an optical jog ball.

5. The optical navigation module (300) of claim 1, 2, 3, or 4, wherein the electrical connection is a flexible printed circuit.

6. The optical navigation module (300) of claim 1, 2, 3, 4, or 5, wherein the alignment flange (310) aligns the optical navigation module (300) in an x-direction and a y-direction.

7. The optical navigation module (300) of claim 1, 2, 3, 4, 5, or 6, wherein the alignment flange (310) forms at least one alignment feature (312) adapted to receive an alignment post.

8. The optical navigation module (300) of claim 1, with each alignment feature (312) formed on the thicker portion (316).

9. The optical navigation module (300) of claim 1, 2, 3, 4, 5, 6, 7 or 8, wherein the alignment flange (310) is pre-loaded.

10. A mobile device (100) comprising:
a display (222); and
an optical navigation module (300) of any one of claims 1 - 9.

11. The mobile device of claim 10, further comprising:
a processor (238) communicatively coupled to the display (222) and communicatively coupled to the optical navigation module (300) via the electrical connection.

12. The mobile device of claim 11, the processor (238) configured to allow navigation on the display (222) in response to inputs associated with the optical navigation module (300).

13. The mobile device of claim 10, 11, or 12, wherein the electrical connection is a flexible printed circuit.

14. The mobile communication device of claim 10, 11, 12, or 13, wherein the alignment flange (310) and the rigid flange (302) are co-molded.

## Patentansprüche

1. Ein optisches Navigationsmodul (300), das aufweist einen starren Flansch (302) mit einer oberen Oberfläche;
eine optische Navigationseinheit (306), die mit der oberen Oberfläche des starren Flansches (302) gekoppelt ist;
eine elektrische Verbindung, die elektrisch mit der optischen Navigationseinheit (306) gekoppelt ist; und
einen Ausrichtungsflansch (310), der mit dem starren Flansch (302) gekoppelt ist, wobei der Ausrichtungsflansch (310) umfasst:
einen mittleren Teil (318), der in Reaktion auf Druck, der auf die optische Navigationseinheit (306) angewendet wird, biegbar ist;
einen komprimierbaren Außenteil (316), der den mittleren Teil (318) umgibt, wobei der Außenteil dicker ist als der mittlere Teil (318); und zumindest ein Ausrichtungsmerkmal (312).

2. Das optische Navigationsmodul (300) gemäß Anspruch 1, wobei der starre Flansch (302) aus Kunststoff ist.

3. Das optische Navigationsmodul (300) gemäß Anspruch 1 oder 2, wobei der starre Flansch (302) ausreichend starr ist zum Vorsehen einer Unterstützung für das optische Navigationsmodul (300) in einer z-Richtung, wenn Druck auf die optische Navigationseinheit (306) angewendet wird.

4. Das optische Navigationsmodul (300) gemäß Anspruch 1, 2 oder 3, wobei die optische Navigationseinheit (306) eine aus einem optischen Navigations-Pad und einem optischen Jog-Ball ist.

5. Das optische Navigationsmodul (300) gemäß Anspruch 1, 2, 3 oder 4, wobei die elektrische Verbindung eine flexible Leiterplatte ist.

6. Das optische Navigationsmodul (300) gemäß Anspruch 1, 2, 3, 4 oder 5, wobei der Ausrichtungsflansch (310) das optische Navigationsmodul (300) in einer x-Richtung und einer y-Richtung ausrichtet.

7. Das optische Navigationsmodul (300) gemäß Anspruch 1, 2, 3, 4, 5 oder 6, wobei der Ausrichtungsflansch (310) zumindest ein Ausrichtungsmerkmal (312) bildet, das ausgebildet ist zum Aufnehmen eines Ausrichtungsstifts.

8. Das optische Navigationsmodul (300) gemäß Anspruch 1, wobei jedes Ausrichtungsmerkmal (312) auf dem dickeren Teil (316) gebildet ist.

9. Das optische Navigationsmodul (300) gemäß Anspruch 1, 2, 3, 4, 5, 6, 7 oder 8, wobei der Ausrichtungsflansch (310) vorgespannt ist.

10. Eine mobile Vorrichtung (100), die aufweist:
eine Anzeige (222); und
ein optisches Navigationsmodul (300) gemäß einem der Ansprüche 1- 9.

11. Die mobile Vorrichtung gemäß Anspruch 10, die weiter aufweist:
einen Prozessor (238), der kommunikativ mit der Anzeige (222) gekoppelt ist und kommunikativ mit dem optischen Navigationsmodul (300) über die elektrische Verbindung gekoppelt ist.

12. Die mobile Vorrichtung gemäß Anspruch 11, wobei der Prozessor (238) konfiguriert ist zum Ermöglichen einer Navigation auf der Anzeige (222) in Reaktion auf Eingaben, die mit dem optischen Navigationsmodul (300) assoziiert sind.

13. Die mobile Vorrichtung gemäß Anspruch 10, 11 oder 12, wobei die elektrische Verbindung eine flexible Leiterplatte ist.

14. Die mobile Kommunikationsvorrichtung gemäß Anspruch 10, 11, 12 oder 13, wobei der Ausrichtungsflansch (310) und der starre Flansch (302) zusammen-geformt sind.

## Revendications

1. Module de navigation optique (300), comprenant :
une bride rigide (302) ayant une surface supérieure ;
une unité de navigation optique (306) reliée à la surface supérieure de la bride rigide (302) ;
une connexion électrique électriquement reliée à l'unité de navigation optique (306) ; et
une bride d'alignement (310) reliée à la bride rigide (302), la bride d'alignement (310) comportant :
une partie centrale (318) qui peut être déviée en réponse à une pression appliquée à l'unité de navigation optique (306) ;
une partie extérieure compressible (316) qui entoure la partie centrale (318), la partie extérieure étant plus épaisse que la partie centrale (318) ; et
au moins un élément d'alignement (312).

2. Module de navigation optique (300) selon la revendication 1, dans lequel la bride rigide (302) est constituée de matière plastique.

3. Module de navigation optique (300) selon la revendication 1 ou 2, dans lequel la bride rigide (302) est suffisamment rigide pour constituer un support pour le module de navigation optique (300) dans une direction z lorsqu'une pression est appliquée à l'unité de navigation optique.

4. Module de navigation optique (300) selon la revendication 1, 2 ou 3, dans lequel l'unité de navigation optique (306) est l'un d'un clavier de navigation optique et d'une boule roulante optique.

5. Module de navigation optique (300) selon la revendication 1, 2, 3 ou 4, dans lequel la connexion électrique est un circuit imprimé flexible.

6. Module de navigation optique (300) selon la revendication 1, 2, 3, 4 ou 5, dans lequel la bride d'alignement (310) aligne le module de navigation optique (300) dans une direction x et une direction y.

7. Module de navigation optique (300) selon la revendication 1, 2, 3, 4, 5 ou 6, dans lequel la bride d'alignement (310) forme au moins un élément d'alignement (312) apte à recevoir un montant d'alignement.

8. Module de navigation optique (300) selon la revendication 1, chaque élément d'alignement (310) étant formé sur une partie plus épaisse (316).

9. Module de navigation optique (300) selon la revendication 1, 2, 3, 4, 5, 6, 7 ou 8, dans lequel la bride d'alignement (310) est pré-chargée.

10. Dispositif mobile (100) comprenant :
un dispositif d'affichage (222) ; et
un module de navigation optique (300) selon l'une quelconque des revendications 1 à 9.

11. Dispositif mobile selon la revendication 10, comprenant en outre :
un processeur (238) couplé par voie de communication au dispositif d'affichage (222) et couplé par voie de communication au module de navigation optique (300) par l'intermédiaire de la connexion électrique.

12. Dispositif mobile selon la revendication 11, le processeur (308) étant configuré pour permettre une navigation sur le dispositif d'affichage (222) en réponse à des entrées associées au module de navigation optique (300).

13. Dispositif mobile selon la revendication 10, 11 ou 12, dans lequel la connexion électrique est un circuit imprimé flexible.

14. Dispositif de communication mobile selon la revendication 10, 11, 12 ou 13, dans lequel la bride d'alignement (310) et la bride rigide (302) sont moulées ensemble.
